# EUROPEAN PATENT APPLICATION

(11) **EP 4 129 589 A1**
(43) Date of publication of application: **08.02.2023**
(21) Application number: 21779439.5
(22) Date of filing: 31.03.2021
(51) Int. Cl.: B26D 1/08, B26D 5/02, B26D 7/01, B26D 7/18, B26D 7/26

(54) **POUCH CUTTING APPARATUS FOR SECONDARY BATTERIES**

(30) Priority: 31.03.2020 KR 20200038992
(71) Applicant: Clever Co., Ltd., Cheongju-si 28514 (KR)
(72) Inventor: JEONG, Jong Hong, Cheongju-si Chungcheongbuk-do 28127 (KR); KIM, Sang Jin, Daejeon 35355 (KR)
(74) Representative: Scheele Jaeger Wetzel Patentanwälte
(86) International application number: PCT/KR2021/003962
(87) International publication number: WO 2021/201581

(57) **Abstract**

Disclosed is a pouch cutting apparatus for secondary batteries, which cuts remaining portions of a terrace of a pouch-type secondary battery except for folded portions, the pouch cutting apparatus including a frame, a lower cutting unit fixed to a lower side of a front surface of the frame and configured to support a lower portion of the terrace in a longitudinal direction of the terrace so that the remaining portion extends to the outside of a rear surface thereof in a state in which the pouch-type secondary battery to be cut is fixed, and an upper cutting unit disposed at an upper side of the front surface of the frame so as to be movable upward or downward and configured to cut the remaining portion extending to the outside of the rear surface of the lower cutting unit, in which the upper cutting unit includes an upper cutter extending in the longitudinal direction of the terrace and having a quadrangular cross-section when viewed from the lateral side, and an upper cutter holder having a lower surface on which the upper cutter is fixedly mounted by means of a plurality of bolts perpendicularly penetrating the upper cutter.

## Description

### [Technical Field]

The present disclosure relates to a pouch cutting apparatus for secondary batteries, and more particularly, to a pouch cutting apparatus for secondary batteries, which is capable of cutting terrace of a pouch-type secondary battery having a large width.

### [Background Art]

This section provides background information related to the present disclosure which is not necessarily prior art.

In general, a pouch-type secondary battery 1 includes an electrode assembly 2 (a main chamber), a pouch casing 3 configured to receive the electrode assembly 2, and electrode tabs 4 extending and protruding from the electrode assembly 2.

Further, the pouch casing 3 includes a casing main body 5 configured to provide a space that may receive the electrode assembly 2, and a casing cover 6 configured to cover the casing main body 5. In this case, edges of the casing main body 5 and the casing cover 6 are typically sealed.

In addition, a sealed edge 7 of the pouch-type secondary battery 1, that is, the edge (terrace) 7 from which the electrode tab 4 is not exposed is folded in order to prevent corrosion occurring at the sealed portion, improve rigidity of the pouch, and reduce an overall size of the pouch-type secondary battery 1 to minimize a space occupied by the pouch-type secondary battery 1.

In this case, portions 7a (hereinafter, referred to as "remaining portions") of the terrace 7 of the pouch-type secondary battery 1, which remain except for folded portions, are cut after the pouch-type secondary battery 1 is aligned before a folding process. Korean Patent No. 10-1974438 discloses an apparatus for cutting the remaining portions 7a.

However, the cutting apparatuses in the related art, including the cutting apparatus disclosed in Korean Patent No. 10-1974438, have the following problems.

First, because the cutting apparatus in the related art each have a structure in which both an upper cutter and a lower cutter move upward or downward during a cutting process, there is a problem in that the structure of the cutting apparatus is complicated.

Second, because the upper cutter of each of the cutting apparatuses in the related art has a vertically extending cross-sectional shape, i.e., a shape such as a typical blade when viewed from the lateral side, there is a problem in that the upper cutter is pushed during the cutting process, which causes a deterioration in cutting quality.

Third, because the cutting apparatus in the related art is coupled to an upper cutting die by means of bolts that penetrate an upper side of a front surface and an upper side of a rear surface of the upper cutter, a spring force is applied to a lower end of the upper cutter, which causes a problem in that the upper cutter and the lower cutter are damaged by colliding with each other.

### [Disclosure]

### [Technical Problem]

An object of the present disclosure is to provide a pouch cutting apparatus for secondary batteries, which is capable of cutting remaining portions of a terrace of a pouch-type secondary battery by moving an upper cutter upward or downward.

Another object of the present disclosure is to provide a pouch cutting apparatus for secondary batteries, which is capable of improving a shape of an upper cutter and a structure for coupling the upper cutter, thereby preventing the upper cutter from being pushed during a process of cutting remaining portions of a terrace of a pouch-type secondary battery.

Still another object of the present disclosure is to provide a pouch cutting apparatus for secondary batteries, which is capable of cutting remaining portions of a terrace of a pouch-type secondary battery based on the principle of scissors.

### [Technical Solution]

This section provides a general summary of the disclosure and is not a comprehensive disclosure of its full scope or all of its features.

One aspect of the present disclosure provides a pouch cutting apparatus for secondary batteries, which cuts remaining portions of a terrace of a pouch-type secondary battery except for folded portions, the pouch cutting apparatus including: a frame; a lower cutting unit fixed to a lower side of a front surface of the frame and configured to support a lower portion of the terrace in a longitudinal direction of the terrace so that the remaining portion extends to the outside of a rear surface thereof in a state in which the pouch-type secondary battery to be cut is fixed; and an upper cutting unit disposed at an upper side of the front surface of the frame so as to be movable upward or downward and configured to cut the remaining portion extending to the outside of the rear surface of the lower cutting unit, in which the upper cutting unit includes: an upper cutter extending in the longitudinal direction of the terrace and having a quadrangular cross-section when viewed from the lateral side; and an upper cutter holder having a lower surface on which the upper cutter is fixedly mounted by means of a plurality of bolts perpendicularly penetrating the upper cutter.

In the pouch cutting apparatus according to one aspect of the present disclosure, the frame may include: a base plate; a top plate having a lower surface disposed to be spaced apart from an upper surface of the base plate while facing the upper surface of the base plate; and a column having a vertical plate shape and configured to connect the base plate and the top plate, first guide rails may be fixedly mounted at two opposite sides of a front surface of the column and support the lower cutting unit and the upper cutting unit, and the first guide rails may extend in a longitudinal direction perpendicular to the column.

In the pouch cutting apparatus according to one aspect of the present disclosure, the lower cutting unit may include: a lower cutter having a vertical plate shape extending in the longitudinal direction of the terrace, the lower cutter having cutting support surfaces formed at upper and lower ends of the lower cutter and configured to selectively support the lower portion of the terrace so that the remaining portion extends to the outside of the rear surface; and a lower cutter holder extending in a longitudinal direction of the lower cutter and having a seat part provided at an upper side of a front surface of the lower cutter holder and configured such that the lower cutter is fixedly mounted on the seat part, the lower cutter holder having lower cutter transfer guide blocks mounted at two opposite sides of a rear surface so as to be slidably fitted with the first guide rails, and the lower cutter holder may be fixedly mounted, by means of bolts, on sub-frames extending from an upper surface of the base plate toward two opposite ends of the lower cutter holder.

In the pouch cutting apparatus according to one aspect of the present disclosure, an accommodation groove may be formed in a front surface of the lower cutter so as to conform to a shape of a lateral portion of an electrode assembly of the pouch-type secondary battery, and the accommodation groove may be recessed toward a central portion of the lower cutter from the cutting support surface and extend in the longitudinal direction of the lower cutter.

In the pouch cutting apparatus according to one aspect of the present disclosure, the seat part may include: a bottom surface having a seat groove into which a lower end of the lower cutter is inserted; and an inner surface on which a rear surface of the lower cutter is fixedly mounted by means of bolts so as to be in close contact with the inner surface, and the lower cutter may be fixedly mounted in the seat part so that any one of the cutting support surfaces is exposed to the outside of an upper side of the inner surface.

In the pouch cutting apparatus according to one aspect of the present disclosure, an upper surface of the lower cutter holder may be formed to be inclined downward in a direction from an upper end of the inner surface to the column so that the cut remaining portion is easily discharged, a scrap discharge hole may be penetratively formed in the column facing the upper surface of the lower cutter holder, and a discharge guide plate may be mounted in the scrap discharge hole and guide the cut remaining portion to the outside of the frame.

The pouch cutting apparatus according to one aspect of the present disclosure may include: a vacuum suction plate configured to suck and fix, by using a vacuum pressure, the pouch-type secondary battery having the remaining portion to be cut, in which the vacuum suction plate horizontally extends in a longitudinal direction of the pouch-type secondary battery to be sucked and fixed, in which the vacuum suction plate is disposed outside a front surface of the lower cutter by support brackets extending from two opposite sides of a front surface of the lower cutter holder, in which a suction support surface is formed on an upper surface of the vacuum suction plate and having a plurality of vacuum suction pads on which a lower side of an electrode assembly of the pouch-type secondary battery is seated and sucked, and in which the suction support surface is disposed to be lower than the cutting support surface.

In the pouch cutting apparatus according to one aspect of the present disclosure, the upper cutting unit may include: the upper cutter extending in the longitudinal direction of the terrace; the upper cutter holder extending in a longitudinal direction of the upper cutter and having a lower surface on which the upper cutter is fixedly mounted, the upper cutter holder having upper cutter transfer guide blocks mounted at two opposite sides of a rear surface of the upper cutter holder and slidably fitted with the first guide rails; a stripper disposed at a front side of the upper cutter holder so as to be movable upward or downward and horizontal extending in the longitudinal direction of the upper cutter, the stripper being configured to press an upper portion of the terrace supported on the cutting support surface exposed to the outside of an upper end of the inner surface of the seat part during a process of cutting the remaining portion of the terrace; and a lifting cylinder configured to move the upper cutter, the upper cutter holder, and the stripper upward or downward, the lifting cylinder may be fixedly mounted on an upper surface of the top plate, and an extension end of a cylinder rod of the lifting cylinder may be connected to an upper surface of the upper cutter holder while perpendicularly penetrating the top plate.

In the pouch cutting apparatus according to one aspect of the present disclosure, the upper cutter may have a quadrangular cross-section in which a width of each of lower and upper surfaces is larger than a height of each of front and rear surfaces when viewed from a lateral side, the upper cutter may be fixedly mounted on a lower surface of the upper cutter holder by means of a plurality of bolts perpendicularly penetrating the upper cutter, and the upper cutter may be fixedly mounted on the lower surface of the upper cutter holder so as to be inclined in a direction from one end to the other end.

In the pouch cutting apparatus according to one aspect of the present disclosure, blade parts may be formed on lower and upper portions of a front surface of the upper cutter and lower and upper portions of a rear surface of the upper cutter that connect the lower and upper surfaces of the upper cutter, the blade parts may extend and protrude in the longitudinal direction of the upper cutter and cut the remaining portion of the terrace, the blade parts may each include: a parallel portion connected to the lower and upper surfaces of the upper cutter; and a vertical portion vertically connected to an extension end of the parallel portion, the parallel portion may press the remaining portion of the terrace extending to the outside of the rear surface of the lower cutter during the process of cutting the remaining portion of the terrace, and the vertical portion may cut the remaining portion while maximally coming into close contact with the rear surface of the lower cutter.

In the pouch cutting apparatus according to one aspect of the present disclosure, a cutting edge portion may be formed at one side of a lower end connected to a front surface of the stripper, the cutting edge portion may press the upper portion of the terrace supported on the cutting support surface, the cutting edge portion may protrude toward a lower side of the stripper while extending in a longitudinal direction of the stripper, and an extension end of the cutting edge portion may be disposed at a position lower than a lower surface of the upper cutter.

In the pouch cutting apparatus according to one aspect of the present disclosure, one or more vertical lifting rods may be formed at a front side of the upper cutter holder, a rear surface of the stripper may be fitted with the vertical lifting rod so as to be movable upward or downward, a compression coil spring may be interposed between the lower cutter, which supports an upper end of the lifting rod, and an upper surface of the stripper, the lower cutter may be fixedly mounted at an upper side of a front surface of the upper cutter holder by means of a bolt, and the other side of the lower end connected to the rear surface of the stripper may be placed on a catching projection protruding from a lower side of the front surface of the upper cutter holder.

The pouch cutting apparatus according to one aspect of the present disclosure may further include: an interval adjustment unit configured to adjust an interval between the pouch cutting apparatus for secondary batteries and a traveling route through which the pouch-type secondary battery is guided, in which the interval adjustment unit includes: a servo motor; a ball screw coupled to the servo motor and extending to perpendicularly intersect the traveling route in a plan view; second guide rails disposed side by side at two opposite sides of the ball screw; and a slider configured such that two opposite sides of a lower surface thereof are slidably mounted on the second guide rails, and a nut block coupled to the ball screw is mounted at a center of the lower surface, and in which the base plate is mounted on an upper surface of the slider.

In the pouch cutting apparatus according to one aspect of the present disclosure, a discharge port may be formed on the upper surface of the slider facing the rear surface of the column and guide the cut remaining portion, which is discharged and guided along the discharge guide plate, to the outside.

### [Advantageous Effects]

According to the present disclosure, the upper cutter cuts the remaining portions of the terrace while moving upward or downward relative to the fixed lower cutter. Therefore, the entire structure is simplified, and maintenance and manufacturing costs for the apparatus may be reduced.

According to the present disclosure, the length of each of the lower and upper surfaces of the upper cutter is longer than the length of each of the front and rear surfaces of the upper cutter, and the upper cutter is fixedly mounted on the lower surface of the upper cutter holder by the bolts perpendicularly penetrating the upper cutter. Therefore, it is possible to prevent the upper cutter from being pushed, which occurs in the related art, during the process of cutting the remaining portions of the terrace.

According to the present disclosure, the upper cutter is fixedly mounted to be inclined in the direction from one end to the other end, which makes it possible to gradually cut the remaining portions of the terrace based on the principle of scissors.

### [Description of Drawings]

FIG. 1 is a view illustrating a pouch-type secondary battery related to the present disclosure.
FIG. 2 is a perspective view illustrating a pouch cutting apparatus for secondary batteries according to the present disclosure.
FIG. 3 is an enlarged view of a lower cutting unit, an upper cutting unit, and a vacuum suction plate, except for an interval adjustment unit illustrated in FIG. 2.
FIG. 4 is a view illustrating the lower cutting unit, the upper cutting unit, and the vacuum suction plate illustrated in FIG. 2 when viewed from the lateral side.
FIG. 5 is a view illustrating the lower cutting unit, the upper cutting unit, and the vacuum suction plate illustrated in FIG. 2 when viewed from the rear side.
FIG. 6 is an enlarged view of a lower cutter illustrated in FIG. 2.
FIG. 7 is an enlarged view of an upper cutter illustrated in FIG. 2.
FIGS. 8 to 10 are views illustrating a state in which the pouch cutting apparatus for secondary batteries according to the present disclosure is used.

### [Modes of the Invention]

Hereinafter, an embodiment of a pouch cutting apparatus for secondary batteries according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

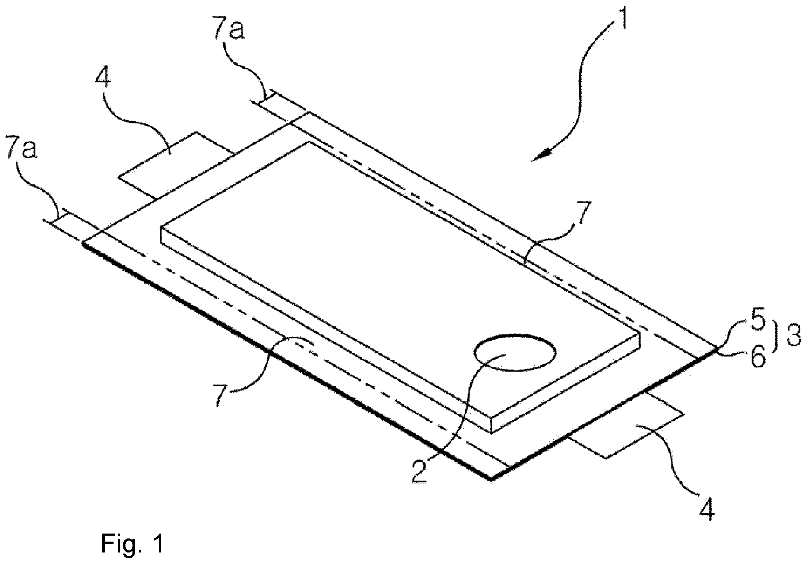

A pouch cutting apparatus 100 for secondary batteries according to the present disclosure may be mounted on a movable robot (not illustrated) during a preceding process and cut portions of a terrace 7 of a supplied pouch-type secondary battery 1 (see FIG. 1), except for folded portions, i.e., remaining portions 7a (see FIG. 1).

To this end, the pouch cutting apparatus 100 for secondary batteries according to the present disclosure is installed prior to a folding process of folding the terrace 7 at a target angle. The pouch cutting apparatus 100 is installed at one side or two opposite sides of a traveling route D for the pouch-type secondary battery 1 that travels along the movable robot (not illustrated) to fold the terrace 7.

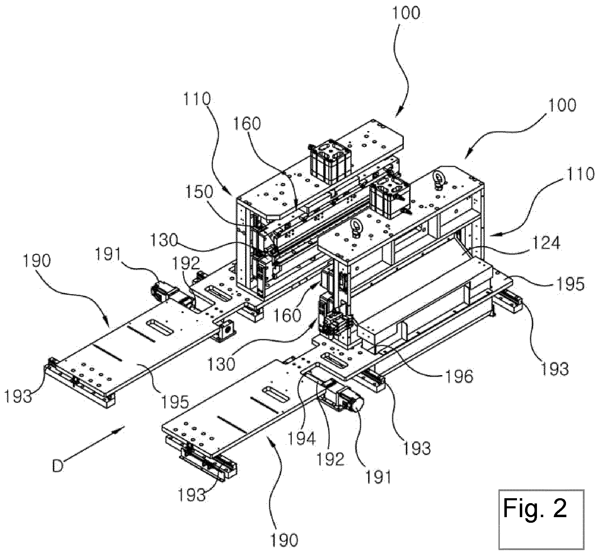

FIG. 2 is a view illustrating the pouch cutting apparatus for secondary batteries according to the present disclosure. FIG. 2 illustrates the pouch cutting apparatuses 100 for secondary batteries are installed at the two opposite sides of the traveling route D so as to face each other with the traveling route D for the pouch-type secondary battery 1 having the terrace 7 to be folded interposed therebetween.

Hereinafter, a surface of the pouch cutting apparatus, which faces the traveling route D for the pouch-type secondary battery 1, is defined as a front surface, and a surface opposite to the front surface is defined as a rear surface.

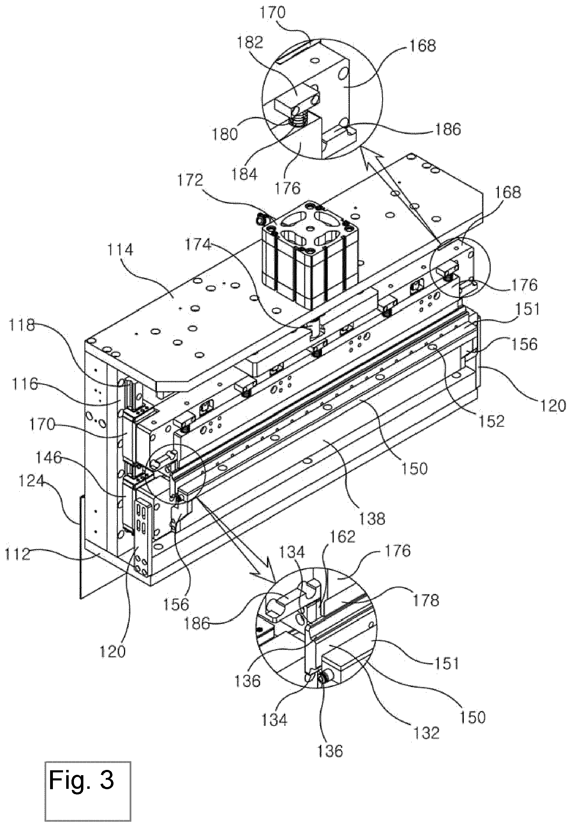

Referring to FIGS. 2 to 10, the pouch cutting apparatus 100 for secondary batteries according to the present disclosure includes a lower cutting unit 130, an upper cutting unit 160, a vacuum suction plate 150, and a frame 110.

First, the frame 110 supports the lower cutting unit 130, the upper cutting unit 160, and the vacuum suction plate 150.

The frame 110 includes a base plate 112, a top plate 114, and a column 116.

The base plate 112 and the top plate 114 are each provided in the form of a horizontal plate shape. As illustrated, the base plate 112 and the top plate 114 are disposed to be spaced apart from each other while facing each other in a vertical direction. That is, an upper surface of the base plate 112 and a lower surface of the top plate 114 are disposed to be spaced apart from each other while facing each other in the vertical direction.

Meanwhile, the column 116 is provided in the form of a vertical plate shape. As illustrated, the column 116 connects the base plate 112 and the top plate 114 disposed to be spaced apart from each other while facing each other in the vertical direction.

In this case, a cutting region in which a process of cutting the remaining portions 7a of the terrace 7 of the pouch-type secondary battery 1 is performed is provided between a front side of the column 116, the base plate 112, and the top plate 114. The lower cutting unit 130, the upper cutting unit 160, and the vacuum suction plate 150 are disposed in the cutting region.

Further, first guide rails 118 are fixedly mounted at two opposite sides of a front surface of the column 116 and support the lower cutting unit 130 and the upper cutting unit 160. The first guide rails 118 allow the lower cutting unit 130 and the upper cutting unit 160 to be positioned on the same line.

The first guide rail 118 vertically extends in a longitudinal direction perpendicular to the column 116 so as not to interfere with the base plate 112 and the top plate 114.

As described above, the lower cutting unit 130 and the upper cutting unit 160 are supported on the first guide rails 118 that is fixedly mounted as described above. The vacuum suction plate 150 is supported on the lower cutting unit 130.

The lower cutting unit 130 supports a lower portion of the terrace 7 so that the remaining portions 7a is smoothly cut during the process of cutting the remaining portions 7a of the terrace 7 of the pouch-type secondary battery 1.

The lower cutting unit 130 includes a lower cutter 132, and a lower cutter holder 138 configured to support the lower cutter 132.

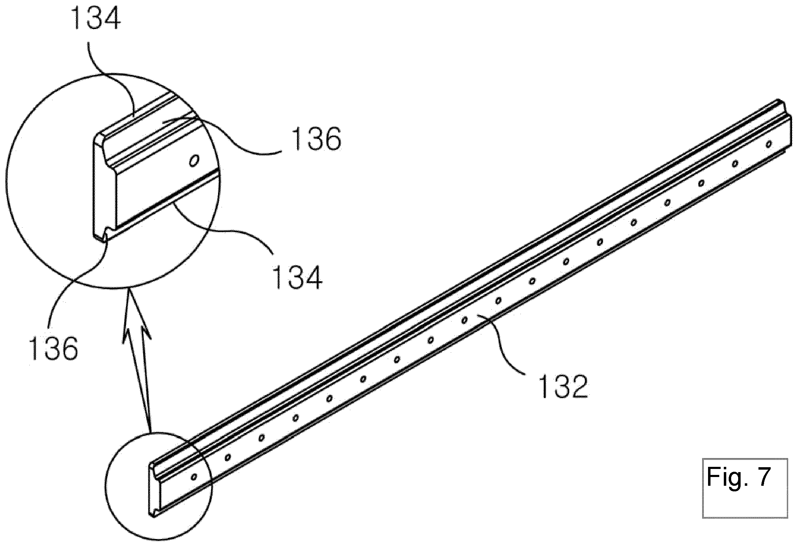

The lower cutter 132 has a thickness that enables the lower cutter 132 to support the lower portion of the terrace 7 except for the remaining portions 7a to be cut. Further, the lower cutter 132 is provided in the form of an approximately vertical plate shape extending in the longitudinal direction of the terrace 7 (see FIG. 7).

In this case, cutting support surfaces 134 are formed at upper and lower ends of the lower cutter 132 and selectively support the lower portion of the terrace 7 during the process of cutting the remaining portions 7a of the terrace 7.

That is, the lower portion of the terrace 7, which is to be folded during a subsequent folding process, is supported on any one of the cutting support surfaces 134. The remaining portions 7a to be cut extends to the outside of the cutting support surface 134, i.e., to the outside of a rear surface of the lower cutter 132.

In this case, an edge portion connecting the rear surface of the lower cutter 132 and the rear surface of the cutting support surface 134 serves as a point of action at which the remaining portion 7a are cut during the process of cutting the remaining portions 7a.

Meanwhile, accommodation grooves 136 are formed in a front surface of the lower cutter 132 and each have a shape that conforms to a shape of a lateral portion of the electrode assembly 2 (see FIG. 1) accommodated in a pouch casing 3 (see FIG. 1).

As illustrated, the accommodation groove 136 is recessed toward a central portion of the lower cutter 132 for each of the cutting support surfaces 134 and extends in the longitudinal direction of the lower cutter 132.

The accommodation groove 136 formed as described above prevents the lateral portion of the electrode assembly 2 from colliding with the cutting support surface 134 when the terrace 7 is supported on the cutting support surface 134. Therefore, it is possible to prevent deformation of and damage to the electrode assembly 2 and prevent the pouch casing 3 from being torn.

The lower cutter holder 138 extends in the longitudinal direction of the lower cutter 132 to support the lower cutter 132.

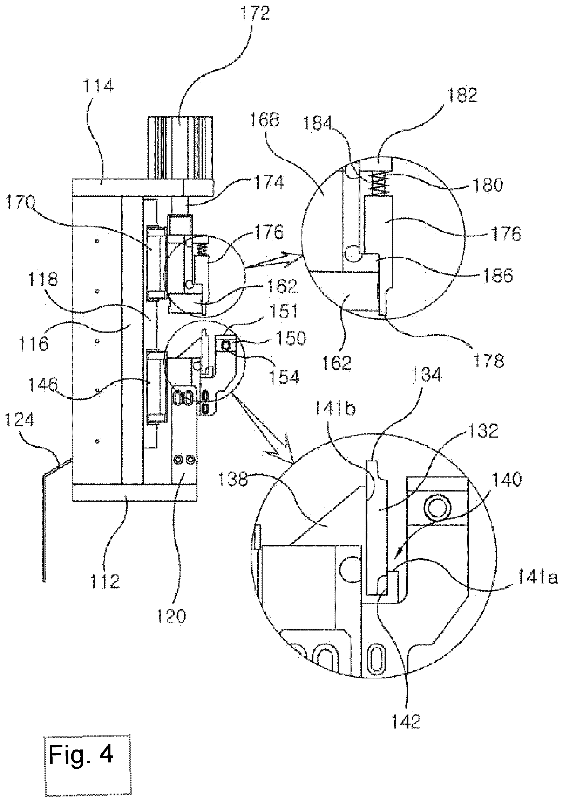

Further, a seat part 140 (see FIG. 4) is provided at an upper side of a front surface of the lower cutter holder 138 and has a front end. The lower cutter 132 is fixedly mounted on the seat part 140.

As illustrated, the seat part 140 includes a bottom surface 141a configured to support a lower end of the lower cutter 132, and an inner surface 141b configured to be in close contact with the rear surface of the lower cutter 132. A seat groove 142 is formed in the bottom surface 141a, and the lower end of the lower cutter 132 is inserted into the seat groove 142.

In this case, the lower cutter 132 is disposed in the seat part 140 so that the cutting support surface 134 provided at the upper end of the lower cutter 132 is exposed to the outside of an upper side of the seat part 140. The rear surface of the lower cutter 132, which is disposed in the seat part 140 as described above, is fixedly mounted by means of a plurality of bolts so as to be in close contact with the inner surface 141b.

Meanwhile, lower cutter transfer guide blocks 146 are mounted at two opposite sides of a rear surface of the lower cutter holder 138 and slidably fitted with the first guide rails 118 adjacent to the lower cutter transfer guide blocks 146.

Further, two opposite ends of the lower cutter holder 138 are fixedly mounted on sub-frames 120 by means of bolts, and the sub-frames 120 vertically extend from an upper surface of the base plate 112 to the two opposite ends of the lower cutter holder 138.

That is, the lower cutter holder 138 may move upward or downward along the first guide rails 118 so that a position of the cutting support surface 134 is adjusted in accordance with a thickness of the pouch-type secondary battery 1 having the remaining portions 7a of the terrace 7 that are to be cut. The lower cutter holder 138, which is completely moved upward or downward, is fixedly mounted on the sub-frames 120.

Further, an upper surface of the lower cutter holder 138 extends toward the column 116 from an upper end of the inner surface 141b of the seat part 140. The upper surface of the lower cutter holder 138 is inclined downward toward the column 116 from the upper end of the inner surface 141b of the seat part 140 so that the cut remaining portions 7a may be discharged while sliding during the process of cutting the remaining portions 7a.

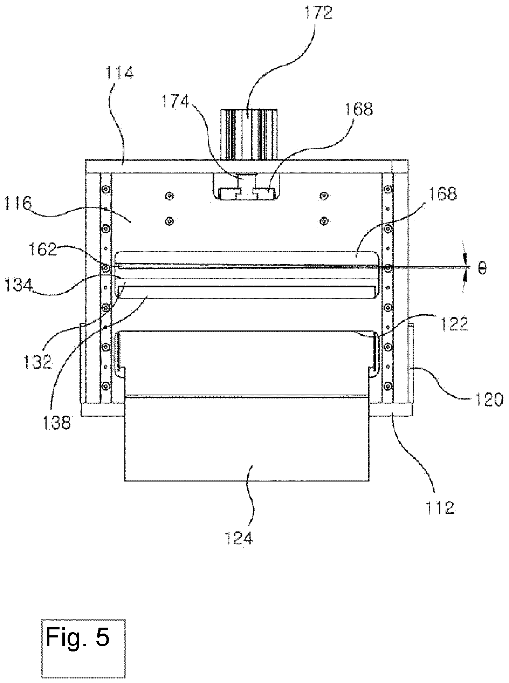

In this case, a scrap discharge hole 122 (see FIGS. 1 and 5) is formed through the column 116 facing the upper surface of the lower cutter holder 138. A discharge guide plate 124 is mounted in the scrap discharge hole 122 and guides the cut remaining portions 7a to the outside of the frame 110.

In this case, like the lower cutter holder 138, the discharge guide plate 124 extends while being inclined downward from the scrap discharge hole 122 to the outside of the rear surface of the column 116. A detection means (not illustrated), i.e., a typical sensor or the like may be mounted at one side of the discharge guide plate 124 and detect the cut remaining portions 7a being discharged.

For example, when the detection means does not detect the remaining portions 7a, which have been cut and are being discharged, even though the upper cutting unit 160 moves downward toward the lower cutting unit 130 to cut the remaining portions 7a, the detection means may output a signal (raise an alarm or emit light) so that an operator may recognize this situation, or the detection means may allow the pouch cutting apparatus 100 for secondary batteries according to the present disclosure to stop operating.

The vacuum suction plate 150 sucks and fixes, by using a vacuum pressure, the pouch-type secondary battery 1 supplied by the movable robot during the process of cutting the remaining portions 7a of the terrace 7 of the pouch-type secondary battery 1.

To this end, as illustrated, the vacuum suction plate 150 is disposed outside the front surface of the lower cutter 132 and horizontally extends in the longitudinal direction of the pouch-type secondary battery 1 to be sucked and fixed.

In this case, a suction support surface 151 is formed on an upper surface of the vacuum suction plate 150, and the lower portion of the electrode assembly 2 of the pouch-type secondary battery 1 is seated and sucked onto the suction support surface 151. A plurality of vacuum suction pads 152 is mounted on the suction support surface 151.

In this case, the suction support surface 151 is disposed to be lower than the cutting support surface 134 so that the lower portion of the terrace 7 of the pouch-type secondary battery 1 may be horizontally placed, without being bent, on the cutting support surface 134 of the lower cutter 132 exposed to the outside of the upper end of the inner surface 141b of the seat part 140 during the process of sucking and fixing the pouch-type secondary battery 1.

Meanwhile, fittings 154 are mounted at the two opposite ends of the vacuum suction plate 150. The fittings 154 guide the vacuum pressure into the vacuum suction plate 150 and guide the discharge of the vacuum pressure that has been guided into the vacuum suction plate 150.

Further, the vacuum suction plate 150 formed as described above is supported by support brackets 156 extending from the two opposite sides of the front surface of the lower cutter holder 138.

In this case, as anyone may know, a vacuum tube line (not illustrated) extending from a vacuum facility (not illustrated) is connected to the fitting 154, and an operation of the vacuum suction plate 150 connected to the vacuum facility is a publicly-known technology. Therefore, a detailed description thereof will be omitted.

That is, during the process of cutting the remaining portions 7a of the terrace 7, the vacuum suction plate 150 sucks and fixes the portion of the electrode assembly 2 of the pouch-type secondary battery 1 supplied to the upper surface of the vacuum suction plate 150 by the movable robot. When the remaining portions 7a of the terrace 7 are completely cut, the vacuum suction plate 150 detaches the pouch-type secondary battery 1 so that the pouch-type secondary battery 1 may be supplied to the folding process.

The upper cutting unit 160 is disposed above the lower cutting unit 130 and cut the remaining portions 7a of the terrace 7 during the process of cutting the remaining portions 7a of the terrace 7 of the pouch-type secondary battery 1.

The upper cutting unit 160 include an upper cutter 162, and an upper cutter holder 168 configured to support the upper cutter 162. Further, the upper cutting unit 160 further include a lifting cylinder 172 configured to move the upper cutter 162 upward or downward.

Like the lower cutter 132, the upper cutter 162 is provided in the form of a bar extending in the longitudinal direction of the terrace 7. The upper cutter 162 has a quadrangular cross-section in which a width of each of the lower and upper surfaces is larger than a height of each of the front and rear surfaces when viewed from the lateral side.

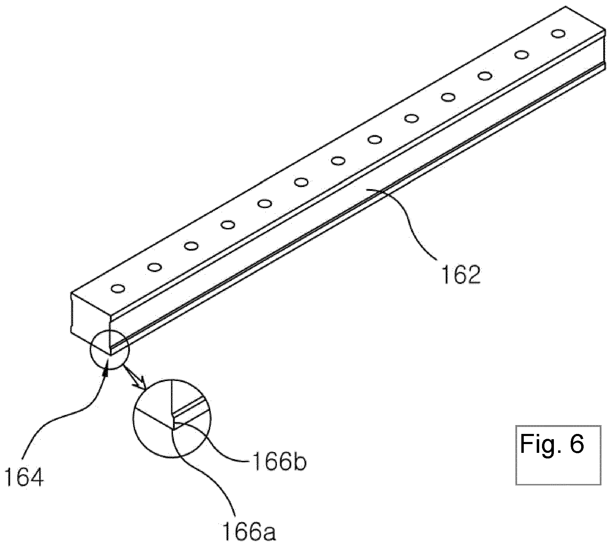

In this case, blade parts 164 are formed on lower and upper portions of a front surface of the upper cutter 162 and lower and upper portions of a rear surface of the upper cutter 162 that connect the lower and upper surfaces of the upper cutter 162. The blade parts 164 substantially cut the remaining portions 7a of the terrace 7. The blade parts 164 integrally protrude (see FIG. 6).

As illustrated, the blade parts 164 each extend in the longitudinal direction of the upper cutter 162. The blade parts 164 each include a parallel portion 166a connected to the lower and upper surfaces of the upper cutter 162, and vertical portions 166b vertically connected to extension ends of the parallel portion 166a. During the process of cutting the remaining portions 7a of the terrace 7, the parallel portion 166a of each of the blade parts 164 presses the remaining portion 7a of the terrace 7 extending to the outside of the rear surface of the lower cutter 132, and the vertical portions 166b maximally come into close contact with the rear surface of the lower cutter 132 at the same time when the parallel portion 166a presses the remaining portion 7a, such that the remaining portion 7a is cut.

In this case, an edge portion of the blade part 164 at which the vertical portion 166b is connected to the parallel portion 166a may serve as a point of action at which the remaining portion 7a is cut during the process of cutting the remaining portions 7a. The blade parts 164 formed on the single upper cutter 162 may alternately cut the remaining portions 7a of the terrace 7.

The upper cutter holder 168 extends in the longitudinal direction of the upper cutter 162 to support the upper cutter 162. The upper cutter 162 is fixedly mounted on a lower surface of the upper cutter holder 168 and faces the lower cutter 132.

In this case, the upper cutter 162 is fixedly mounted on the lower surface of the upper cutter holder 168 by means of a plurality of bolts that vertically penetrates the upper cutter 162 without interfering with the blade parts 164. Further, the upper cutter 162 is fixedly mounted on the lower surface of the upper cutter holder 168 so as to be inclined at a predetermined angle 0 (see FIG. 5) in a direction from one end to the other end.

That is, because the upper cutter 162 is fixedly mounted on the lower surface of the upper cutter holder 168 by the bolts that vertically penetrate the upper cutter 162, it is possible to prevent the upper cutter 162 from being pushed during the process of cutting the remaining portions 7a of the terrace 7. Further, because the upper cutter 162 is fixedly mounted to be inclined in the direction from one end to the other end, the remaining portions 7a of the terrace 7 may be gradually cut based on the principle of typical scissors.

Meanwhile, upper cutter transfer guide blocks 170 are mounted at two opposite sides of a rear surface of the upper cutter holder 168 and slidably fitted with the first guide rails 118 adjacent to the upper cutter transfer guide blocks 170.

The lifting cylinder 172 may move the upper cutter 162 downward toward the lower cutter 132 so that the upper cutter 162 may cut the remaining portions 7a of the terrace 7.

To this end, as illustrated, the lifting cylinder 172 is fixedly mounted on an upper surface of the top plate 114. Further, an extension end of a cylinder rod 174 of the lifting cylinder 172 vertically penetrates the top plate 114 and is connected to an upper surface of the upper cutter holder 168.

That is, the lifting cylinder 172 extends the cylinder rod 174 during the process of cutting the remaining portions 7a of the terrace 7. Therefore, the upper cutter holder 168 and the upper cutter 162 cut the remaining portions 7a of the terrace 7 while moving downward toward the lower cutter 132 along the first guide rails 118.

Further, when the remaining portions 7a of the terrace 7 are completely cut, the lifting cylinder 172 returns the cylinder rod 174. Therefore, the upper cutter holder 168 and the upper cutter 162 are returned to the side above the lower cutter 132 while moving along the first guide rails 118 and prepared for the next cutting process.

Meanwhile, a stripper 176 is mounted at a front side of the upper cutter holder 168 and presses the cutting support surface 134 of the lower cutter 132, i.e., an upper portion of the terrace 7 supported on the cutting support surface 134 of the lower cutter 132 exposed to the outside of the upper end of the inner surface 141b of the seat part 140 during the process of cutting the remaining portions 7a of the terrace 7.

The stripper 176 horizontally extends in the longitudinal direction of the upper cutter 162 to press the upper portion of the terrace 7. A cutting edge portion 178 is integrally formed at one side of the lower end connected to the front surface of the stripper 176.

As illustrated, the cutting edge portion 178 vertically protrudes to the outside of the lower end of the stripper 176. The cutting edge portion 178 extends in the longitudinal direction of the stripper 176.

In this case, an extension end of the cutting edge portion 178 is disposed at a position lower than the lower surface of the upper cutter 162 mounted on the upper cutter holder 168 so that the extension end of the cutting edge portion 178 may move downward first before the downward movement of the upper cutter 162 and then press the upper portion of the terrace 7 supported on the cutting support surface 134 during the process of cutting the remaining portions 7a of the terrace 7.

Meanwhile, the stripper 176 may be disposed at the front side of the upper cutter holder 168 and configured to be resiliently movable upward or downward.

To this end, one or more vertical lifting rods 180 are disposed at the front side of the upper cutter holder 168, and the rear surface of the stripper 176 is fitted with the vertical lifting rods 180 so as to be movable upward or downward. Compression coil springs 184 are interposed between an upper surface of the stripper 176 and fixing brackets 182 configured to support upper ends of the lifting rods 180.

In this case, the fixing brackets 182 are fixedly mounted at an upper side of the front surface of the upper cutter holder 168 by means of bolts. The other side of the lower end of the stripper 176 connected to the rear surface of the stripper 176 is placed on catching projections 186 protruding from a lower side of the front surface of the upper cutter holder 168 so as not to interfere with the cutting edge portion 178.

That is, the stripper 176 moves upward or downward between the fixing brackets 182 and the catching projections 186 along the lifting rods 180. During the process of cutting the remaining portions 7a of the terrace 7, the stripper 176 is moved downward along the upper cutter 162 and the upper cutter holder 168 by the lifting cylinder 172 and presses the upper portion of the terrace 7 supported on the cutting support surface 134 of the lower cutter 132 exposed to the outside of the upper end of the inner surface 141b of the seat part 140. Next, when the lifting cylinder 172 moves the upper cutter 162 and the upper cutter holder 168 downward to cut the remaining portion 7a, the stripper 176 moves upward along the lifting rods 180 while compressing the compression coil springs 184.

Further, when the remaining portions 7a of the terrace 7 are completely cut and the lifting cylinder 172 moves the upper cutter 162 and the upper cutter holder 168 upward, the stripper 176 moves along the upper cutter holder 168 while releasing the terrace 7. In this case, the stripper 176 is moved downward along the lifting rods 180 by restoring forces of the compression coil springs 184.

Meanwhile, the pouch cutting apparatus 100 for secondary batteries according to the present disclosure further includes an interval adjustment unit 190 configured to adjust an interval between the traveling route D of the pouch-type secondary battery 1 and the pouch cutting apparatus 100 for secondary batteries according to the present disclosure (see FIG. 1).

That is, the interval adjustment unit 190 may adjust the traveling route D for the pouch-type secondary battery 1 and the pouch cutting apparatus 100 for secondary batteries according to the present disclosure when the size of the pouch-type secondary battery 1 having the remaining portions 7a of the terrace 7 to be cut is changed.

The interval adjustment unit 190 includes: a servo motor 191; a ball screw 192 coupled to the servo motor 191 by means of a typical coupling and extending to perpendicularly intersect the traveling route D for the pouch-type secondary battery 1 in a plan view; second guide rails 193 disposed side by side at two opposite sides of the ball screw 192; and a slider 195 configured such that two opposite sides of a lower surface thereof are slidably mounted on the second guide rails 193, and a nut block 194 coupled to the ball screw 192 is mounted at a center of the lower surface.

In this case, the base plate 112 of the frame 110 is mounted on an upper surface of the slider 195. A discharge port 196 is formed on the upper surface of the slider 195 facing the rear surface of the column 116 and guides the cut remaining portions 7a, which is discharged and guided along the discharge guide plate 124, to the outside of the pouch cutting apparatus according to the present disclosure.

Because the operation of the interval adjustment unit 190 is a publicly-known technology, a detailed description thereof will be omitted.

Hereinafter, an operating state of the pouch cutting apparatus 100 for secondary batteries according to the present disclosure configured as described above will be briefly described.

The pouch-type secondary battery 1 having the remaining portions 7a of the terrace 7 to be cut is aligned by an alignment means provided in the previous process of the present disclosure. The aligned pouch-type secondary battery 1, i.e., the pouch-type secondary battery 1 having the remaining portions 7a of the terrace 7 to be cut is mounted on the movable robot and supplied to the suction support surface 151 of the vacuum suction plate 150 according to the present disclosure.

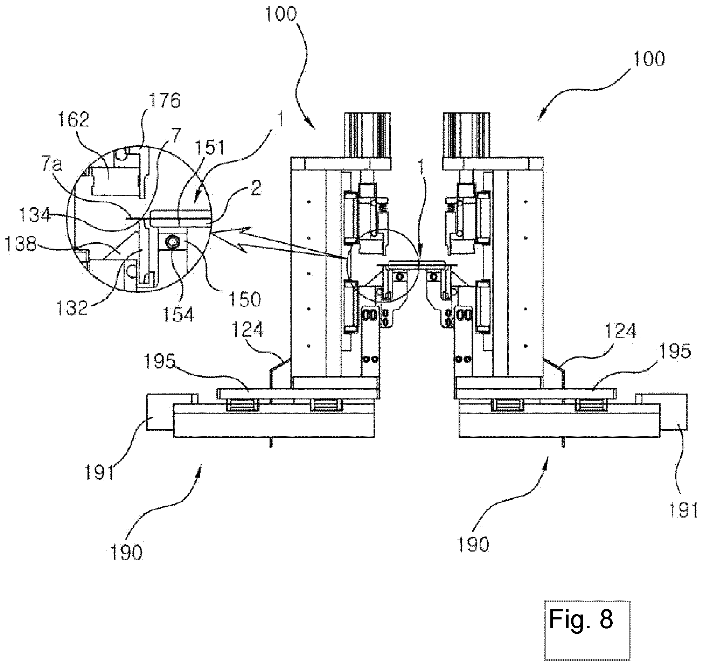

In this case, the lower portion of the terrace 7 of the pouch-type secondary battery 1 is supported on the cutting support surface 134 of the lower cutter 132 exposed to the outside of the upper end of the inner surface 141b of the seat part 140. The remaining portions 7a of the terrace 7, which is to be cut, extends to the outside of the rear surface of the lower cutter 132 (see FIG. 8).

When the pouch-type secondary battery 1 is supplied to the suction support surface 151 of the vacuum suction plate 150 as described above, the vacuum pressure is applied to the vacuum suction plate 150, and the vacuum suction plate 150 sucks and fixes the pouch-type secondary battery 1.

In this case, the vacuum suction pads 152 of the vacuum suction plate 150 sucks and fixes the portion of the electrode assembly 2 of the pouch-type secondary battery 1 (see FIG. 8).

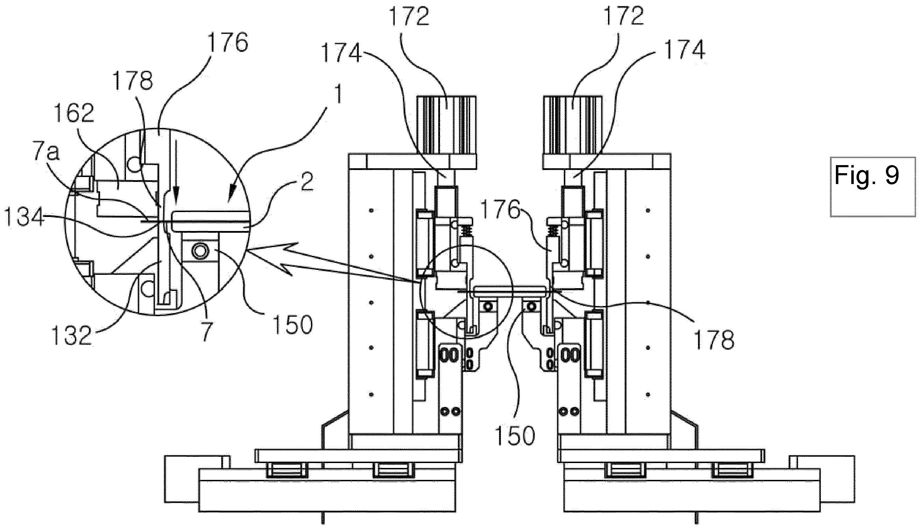

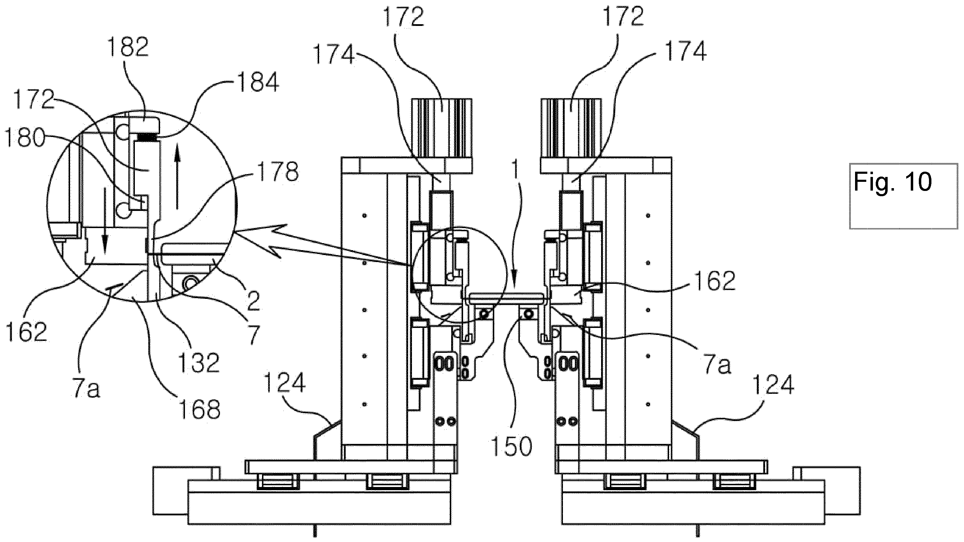

Meanwhile, when the pouch-type secondary battery 1 is sucked and fixed to the vacuum suction plate 150 as described above, the upper cutter holder 168 on which the upper cutter 162 and the stripper 176 are mounted moves downward and cuts the remaining portions 7a of the terrace 7 (see FIGS. 9 and 10).

That is, when the lifting cylinder 172 operates to extend the cylinder rod 174, the upper cutter holder 168 is moved downward toward the lower cutter 132, and the stripper 176 and the upper cutter 162 are also moved downward as the upper cutter holder 168 is moved downward. In this case, the cutting edge portion 178 of the stripper 176 presses the upper portion of the terrace 7 supported on the cutting support surface 134 (see FIG. 9).

Further, when the lifting cylinder 172 continuously moves the upper cutter holder 168 downward, the parallel portion 166a of the blade part 164 provided on the upper cutter 162 presses the remaining portions 7a of the terrace 7. In this case, the vertical portion 166b maximally comes into close contact with the rear surface of the lower cutter 132 while the parallel portion 166a presses the remaining portions 7a, thereby cutting the remaining portions 7a.

Further, at the same time when the remaining portions 7a are completely cut, the lifting cylinder 172 returns the cylinder rod 174, such that the upper cutter holder 168 on which the upper cutter 162 and the stripper 176 are mounted is moved upward toward the position above the lower cutter 132.

In this case, the remaining portions 7a, which are cut by the lower cutter 132 and the upper cutter 162, are moved along the upper surface of the inclined lower cutter holder 138 and discharged to the outside of the pouch cutting apparatus of the present disclosure through the discharge port 196 via the discharge hole 122,and the discharge guide plate 124 (see FIG. 10).

Further, when the remaining portions 7a are completely cut and the upper cutter holder 178 is moved upward, the vacuum suction plate 150 detaches the pouch-type secondary battery 1 so that the pouch-type secondary battery 1 from which the remaining portions 7a are cut may be supplied to the folding process by the movable robot.

According to the pouch cutting apparatus 100 for secondary batteries according to the present disclosure configured as described above, the upper cutter 162 cuts the remaining portions 7a of the terrace 7 while moving upward or downward relative to the fixed lower cutter 132. Therefore, the entire structure is simplified, and maintenance and manufacturing costs for the apparatus may be reduced.

In addition, according to the pouch cutting apparatus 100 for secondary batteries according to the present disclosure, the length of each of the lower and upper surfaces of the upper cutter 162 is longer than the length of each of the front and rear surfaces of the upper cutter 162, and the upper cutter 162 is fixedly mounted on the lower surface of the upper cutter holder 168 by the bolts perpendicularly penetrating the upper cutter 162. Therefore, it is possible to prevent the upper cutter 162 from being pushed, which occurs in the related art, during the process of cutting the remaining portions 7a of the terrace 7.

In addition, according to the pouch cutting apparatus 100 for secondary batteries according to the present disclosure, the upper cutter 162 is fixedly mounted to be inclined in the direction from one end to the other end, which makes it possible to gradually cut the remaining portions 7a of the terrace 7 based on the principle of scissors.

## Claims

1. A pouch cutting apparatus for secondary batteries, which cuts remaining portions of a terrace of a pouch-type secondary battery except for folded portions, the pouch cutting apparatus comprising:
a frame;
a lower cutting unit fixed to a lower side of a front surface of the frame and configured to support a lower portion of the terrace in a longitudinal direction of the terrace so that the remaining portion extends to the outside of a rear surface thereof in a state in which the pouch-type secondary battery to be cut is fixed; and
an upper cutting unit disposed at an upper side of the front surface of the frame so as to be movable upward or downward and configured to cut the remaining portion extending to the outside of the rear surface of the lower cutting unit,
wherein the upper cutting unit comprises:
an upper cutter extending in the longitudinal direction of the terrace and having a quadrangular cross-section when viewed from the lateral side; and
an upper cutter holder having a lower surface on which the upper cutter is fixedly mounted by means of a plurality of bolts perpendicularly penetrating the upper cutter.

2. The pouch cutting apparatus of claim 1, wherein the frame comprises:
a base plate;
a top plate having a lower surface disposed to be spaced apart from an upper surface of the base plate while facing the upper surface of the base plate; and
a column having a vertical plate shape and configured to connect the base plate and the top plate, and
wherein first guide rails are fixedly mounted at two opposite sides of a front surface of the column and support the lower cutting unit and the upper cutting unit, and the first guide rails extend in a longitudinal direction perpendicular to the column.

3. The pouch cutting apparatus of claim 2, wherein the lower cutting unit comprises:
a lower cutter having a vertical plate shape extending in the longitudinal direction of the terrace, the lower cutter having cutting support surfaces formed at upper and lower ends of the lower cutter and configured to selectively support the lower portion of the terrace so that the remaining portion extends to the outside of the rear surface; and
a lower cutter holder extending in a longitudinal direction of the lower cutter and having a seat part provided at an upper side of a front surface of the lower cutter holder and configured such that the lower cutter is fixedly mounted on the seat part, the lower cutter holder having lower cutter transfer guide blocks mounted at two opposite sides of a rear surface so as to be slidably fitted with the first guide rails, and
wherein the lower cutter holder is fixedly mounted, by means of bolts, on sub-frames extending from an upper surface of the base plate toward two opposite ends of the lower cutter holder.

4. The pouch cutting apparatus of claim 3, wherein an accommodation groove is formed in a front surface of the lower cutter so as to conform to a shape of a lateral portion of an electrode assembly of the pouch-type secondary battery, and the accommodation groove is recessed toward a central portion of the lower cutter from the cutting support surface and extends in the longitudinal direction of the lower cutter.

5. The pouch cutting apparatus of claim 3, wherein the seat part comprises:
a bottom surface having a seat groove into which a lower end of the lower cutter is inserted; and
an inner surface on which a rear surface of the lower cutter is fixedly mounted by means of bolts so as to be in close contact with the inner surface, and
wherein the lower cutter is fixedly mounted in the seat part so that any one of the cutting support surfaces is exposed to the outside of an upper side of the inner surface.

6. The pouch cutting apparatus of claim 5, wherein an upper surface of the lower cutter holder is formed to be inclined downward in a direction from an upper end of the inner surface to the column so that the cut remaining portion is easily discharged,
wherein a scrap discharge hole is penetratively formed in the column facing the upper surface of the lower cutter holder, and
wherein a discharge guide plate is mounted in the scrap discharge hole and guides the cut remaining portion to the outside of the frame.

7. The pouch cutting apparatus of claim 3, comprising:
a vacuum suction plate configured to suck and fix, by using a vacuum pressure, the pouch-type secondary battery having the remaining portion to be cut,
wherein the vacuum suction plate horizontally extends in a longitudinal direction of the pouch-type secondary battery to be sucked and fixed,
wherein the vacuum suction plate is disposed outside a front surface of the lower cutter by support brackets extending from two opposite sides of a front surface of the lower cutter holder,
wherein a suction support surface is formed on an upper surface of the vacuum suction plate and having a plurality of vacuum suction pads on which a lower side of an electrode assembly of the pouch-type secondary battery is seated and sucked, and
wherein the suction support surface is disposed to be lower than the cutting support surface.

8. The pouch cutting apparatus of claim 5, wherein the upper cutting unit comprises:
the upper cutter extending in the longitudinal direction of the terrace;
the upper cutter holder extending in a longitudinal direction of the upper cutter and having a lower surface on which the upper cutter is fixedly mounted, the upper cutter holder having upper cutter transfer guide blocks mounted at two opposite sides of a rear surface of the upper cutter holder and slidably fitted with the first guide rails;
a stripper disposed at a front side of the upper cutter holder so as to be movable upward or downward and horizontal extending in the longitudinal direction of the upper cutter, the stripper being configured to press an upper portion of the terrace supported on the cutting support surface exposed to the outside of an upper end of the inner surface of the seat part during a process of cutting the remaining portion of the terrace; and
a lifting cylinder configured to move the upper cutter, the upper cutter holder, and the stripper upward or downward,
wherein the lifting cylinder is fixedly mounted on an upper surface of the top plate, and
wherein an extension end of a cylinder rod of the lifting cylinder is connected to an upper surface of the upper cutter holder while perpendicularly penetrating the top plate.

9. The pouch cutting apparatus of claim 8, wherein the upper cutter has a quadrangular cross-section in which a width of each of lower and upper surfaces is larger than a height of each of front and rear surfaces when viewed from a lateral side,
wherein the upper cutter is fixedly mounted on a lower surface of the upper cutter holder by means of a plurality of bolts perpendicularly penetrating the upper cutter, and
wherein the upper cutter is fixedly mounted on the lower surface of the upper cutter holder so as to be inclined in a direction from one end to the other end.

10. The pouch cutting apparatus of claim 8, wherein blade parts are formed on lower and upper portions of a front surface of the upper cutter and lower and upper portions of a rear surface of the upper cutter that connect the lower and upper surfaces of the upper cutter,
wherein the blade parts extend and protrude in the longitudinal direction of the upper cutter and cut the remaining portion of the terrace,
wherein the blade parts each comprise:
a parallel portion connected to the lower and upper surfaces of the upper cutter; and
a vertical portion vertically connected to an extension end of the parallel portion,
wherein the parallel portion presses the remaining portion of the terrace extending to the outside of the rear surface of the lower cutter during the process of cutting the remaining portion of the terrace, and
wherein the vertical portion cuts the remaining portion while maximally coming into close contact with the rear surface of the lower cutter.

11. The pouch cutting apparatus of claim 10, wherein a cutting edge portion is formed at one side of a lower end connected to a front surface of the stripper,
wherein the cutting edge portion presses the upper portion of the terrace supported on the cutting support surface,
wherein the cutting edge portion protrudes toward a lower side of the stripper while extending in a longitudinal direction of the stripper, and
wherein an extension end of the cutting edge portion is disposed at a position lower than a lower surface of the upper cutter.

12. The pouch cutting apparatus of claim 11, wherein one or more vertical lifting rods are formed at a front side of the upper cutter holder,
wherein a rear surface of the stripper is fitted with the vertical lifting rod so as to be movable upward or downward,
wherein an upper end of the lifting rod is fixed to and supported on a fixing bracket,
wherein a compression coil spring is interposed between the fixing bracket and an upper surface of the stripper,
wherein the fixing bracket is fixedly mounted at an upper side of a front surface of the upper cutter holder by means of a bolt, and
wherein the other side of the lower end connected to the rear surface of the stripper is placed on a catching projection protruding from a lower side of the front surface of the upper cutter holder.

13. The pouch cutting apparatus of claim 6, further comprising:
an interval adjustment unit configured to adjust an interval between the pouch cutting apparatus for secondary batteries and a traveling route through which the pouch-type secondary battery is guided,
wherein the interval adjustment unit comprises:
a servo motor;
a ball screw coupled to the servo motor and extending to perpendicularly intersect the traveling route in a plan view;
second guide rails disposed side by side at two opposite sides of the ball screw; and
a slider configured such that two opposite sides of a lower surface thereof are slidably mounted on the second guide rails, and a nut block coupled to the ball screw is mounted at a center of the lower surface, and
wherein the base plate is mounted on an upper surface of the slider.

14. The pouch cutting apparatus of claim 13, wherein a discharge port is formed on the upper surface of the slider facing the rear surface of the column and guides the cut remaining portion, which is discharged and guided along the discharge guide plate, to the outside.
